Europäisches Patentamt

European Patent Office

Office européen des brevets

(19)

(11) Numéro de publication: **0 380 896**
**A1**

## (12) DEMANDE DE BREVET EUROPEEN

(21) Numéro de dépôt: 89403630.0

(22) Date de dépôt: 22.12.89

(51) Int. Cl.5: **D06F 75/24, D06F 75/38, H05B 3/30, H05B 3/72**

(30) Priorité: 04.01.89 FR 8900049

(43) Date de publication de la demande:
08.08.90 Bulletin 90/32

(84) Etats contractants désignés:
**CH DE ES GB IT LI NL**

(71) Demandeur: **SEB S.A.**

**F-21260 Selongey(FR)**

(72) Inventeur: **Louison, Bernard**
**Le Blanchard**
**F-42410 Chavanay(FR)**
Inventeur: **Burton, Camille**
**La Citadelle Limas**
**F-69400 Villefranche s/Saone(FR)**

(74) Mandataire: **Bouju, André**
**Cabinet Bouju 38 avenue de la Grande**
**Armée**
**F-75017 Paris(FR)**

(54) **Semelle de fer à repasser réalisée par assemblage de plusieurs feuilles métalliques brasées l'une à l'autre.**

(57) La semelle comprend une première plaque (1) constituant la semelle et comportant une couche colaminée de brasage, une seconde plaque (2) constituant la chambre de vaporisation et comportant une couche colaminée de brasage et un élément chauffant résistant plat (4) inséré entre les deux plaques (1, 2) et séparé de celles-ci par des couches isolantes (5, 6, 7, 8).

Ces deux plaques (1, 2) sont assemblées l'une à l'autre par une brasure étanche périphérique et une série de brasures réalisées au niveau de bossages (3).

Utilisation notamment dans les semelles de fer à repasser à vapeur.

FIG.1

EP 0 380 896 A1

## Semelle de fer à repasser réalisée par assemblage de plusieurs feuilles métalliques brasées l'une à l'autre

La présente invention concerne une semelle de fer à repasser à vapeur réalisée par assemblage de plusieurs feuilles métalliques brasées l'une à l'autre et comprenant entre deux de ces feuilles un élément chauffant résistant plat.

Les fers à repasser actuellement dans le commerce possèdent une résistance chauffante isolée de la masse de l'appareil par une couche d'isolant, dénommée par les normes NF, "isolant fonctionnel principal". Cet isolant peut être : l'enrobage de magnésie dans le cas de résistance blindée, une feuille de micanite dans le cas d'élément chauffant plat bridé, etc.). De ce fait, le cordon d'alimentation électrique doit posséder, en plus des conducteurs de courant, un fil de mise à la terre. Ces appareils sont dits de la classe I. Ces trois conducteurs nécessitent un cordon de fort diamètre, et si l'on désire utiliser un enrouleur, ce dispositif d'emmagasinage devra être volumineux, ce qui entraîne des surcoûts.

La normalisation tant européenne qu'américaine et japonaise admet la suppression du fil de terre si l'isolation de la résistance par rapport à la masse de l'appareil est réalisée par une couche d'isolants de 1 mm, ou par deux couches d'isolants superposés et séparables supplémentaires à l'isolation principale, soit trois couches de chaque côté de l'élément chauffant. Les appareils sont alors dits de classe II. Le cordon d'alimentation peut n'avoir que deux fils conducteurs, ce qui permet de monter des enrouleurs peu encombrants.

La présente invention vise à créer une semelle de fer à repasser à vapeur ou à sec, de classe II, à un prix de revient très compétitif et sans modification des qualités thermiques du fer. En effet, la présence d'un isolant de 1 mm de chaque côté de l'élément chauffant freinant considérablement la transmission thermique, il est possible d'utiliser des feuilles de micanite de 0,1 mm d'épaisseur, dont la rigidité électrique est conforme à la norme (2 500 Volts). Du fait de leur faible épaisseur, ces feuilles de micanite se comportent comme transparentes au rayonnement infrarouge. De plus, bien que la norme oblige à doubler le nombre d'isolants entre l'isolant fonctionnel et la masse, l'épaisseur résultant de 0,2 mm ne constitue qu'un frein négligeable à la transmission thermique par conduction.

A noter que l'épaisseur totale de l'élément chauffant et des quatre feuilles isolantes est de 1 mm ± 0,1, soit 0,5 mm ± 0,05 entre l'élément chauffant et la masse métallique à chauffer.

La demanderesse a décrit dans sa demande de brevet français n° 88 02625 déposée le 2 mars 1988, un composant chauffant plat, comprenant un élément chauffant électriquement résistant enrobé dans une matière électriquement isolante et compris entre deux plaques métalliques fixées l'une à l'autre par une série de soudures réalisées au travers de lacunes pratiquées dans l'élément chauffant. Ces soudures sont réalisées par brasage, ce brasage étant obtenu par fusion d'une feuille de brasure colaminée avec l'une et/ou l'autre des deux plaques métalliques.

Le but de la présente invention est d'appliquer l'enseignement de la demande de brevet français précitée, à la réalisation d'une semelle de fer à repasser qui remplit les conditions énoncées plus haut.

Suivant l'invention, cette semelle de fer à repasser est caractérisée en ce qu'elle comprend :
- une première plaque constituant la semelle et présentant une face devant venir en contact avec l'article textile à repasser et réalisée par emboutissage d'une feuille d'aluminium comprenant sur sa face opposée à la face précitée, une couche colaminée d'alliage de brasage,
- une seconde plaque constituant le fond de la chambre de vaporisation et réalisée par emboutissage d'une feuille d'aluminium comprenant sur sa face adjacente à la première plaque une couche colaminée d'alliage de brasage, ainsi qu'une série de bossages en contact avec ladite face de la première plaque comportant une couche colaminée d'alliage de brasage,
- un élément chauffant résistant plat inséré entre les deux plaques précitées et séparé de celles-ci par des couches électriquement isolantes, les bossages de la seconde plaque étant engagés dans des lacunes ménagées dans ledit élément chauffant et lesdites couches isolantes, et
- les deux plaques étant assemblées l'une à l'autre par une brasure étanche périphérique et une série de brasures réalisées au niveau des bossages.

L'élément chauffant résistant est ainsi compris entre deux plaques assemblées l'une à l'autre d'une manière étanche, de sorte qu'il ne risque pas d'être mis en contact avec de l'eau ou de la vapeur d'eau.

L'invention permet ainsi de réaliser un fer à repasser de classe II dont le coût est raisonnable.

Selon une version préférée de l'invention, la semelle comporte en outre une plaque de fermeture de la chambre de vaporisation réalisée par emboutissage d'une feuille d'aluminium comportant sur sa face en regard de la seconde plaque une couche colaminée d'alliage de brasage, cette plaque de fermeture étant fixée par brasage aux deux autres plaques en même temps que ces deux dernières.

Le fait que cette plaque de fermeture soit brasée aux deux autres plaques, en même temps que ces deux dernières, garantit une excellente étanchéité de la chambre de vaporisation et permet de réaliser une fabrication en grande série à un coût très intéressant.

De préférence, le bord extérieur de la seconde plaque entoure complètement l'élément chauffant électrique, ce bord étant relié de façon étanche à la première plaque par une brasure périphérique.

De préférence également le bord extérieur de la seconde plaque entoure également les contacts d'alimentation électrique de l'élément chauffant résistant.

A cet effet, la seconde plaque comporte des passages dans lesquels sont engagés les contacts d'alimentation électrique en appui sur l'élément chauffant résistant.

De préférence, les passages précités sont obturés de façon étanche par des organes isolant les contacts d'alimentation.

Ainsi, ces contacts d'alimentation sont à la fois parfaitement isolés et l'eau ou la vapeur d'eau ne risque pas de pénétrer dans l'espace compris entre les première et seconde plaques.

D'autres particularités et avantages de l'invention apparaîtront encore dans la description ci-après.

Aux dessins annexés donnés à titre d'exemples non limitatifs :

- la figure 1 est une vue éclatée en coupe suivant I-I de la figure 2 d'une semelle de fer à repasser à vapeur conforme à l'invention,

- la figure 1A est une vue agrandie du détail A de la figure 1,

- la figure 1B est une vue agrandie du détail B de la figure 1,

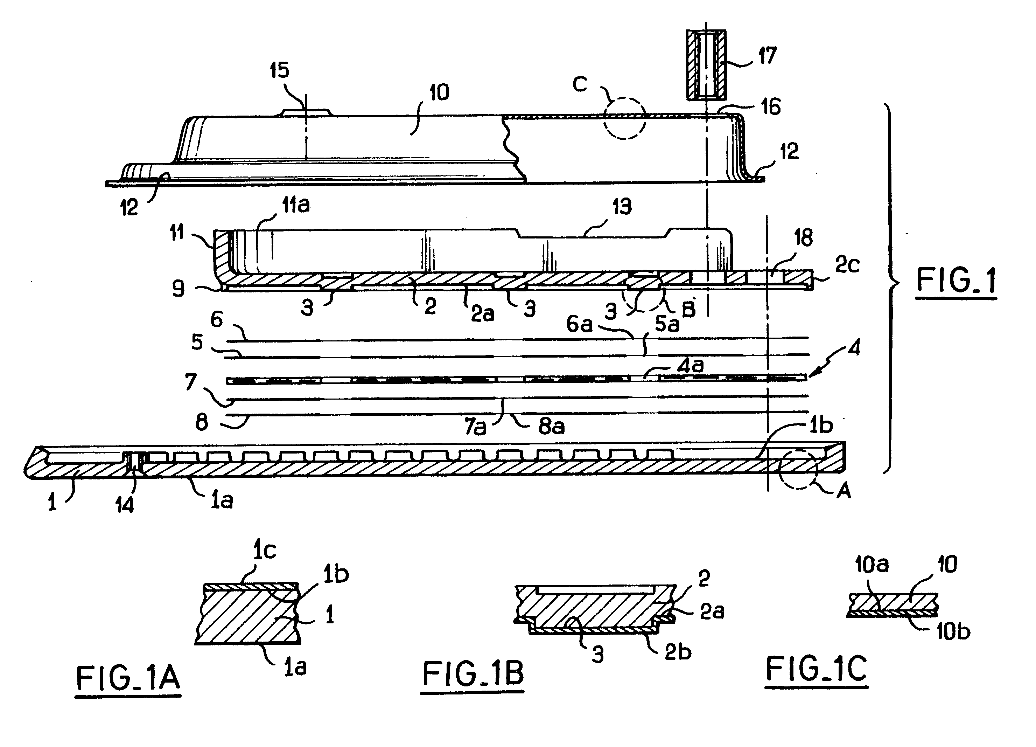

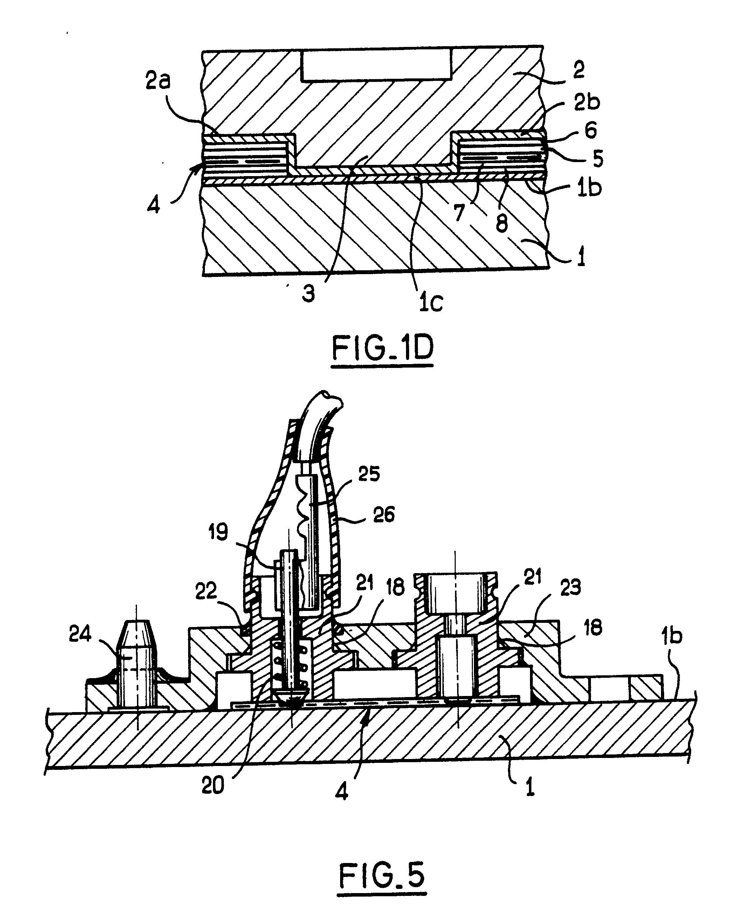

- la figure C est une vue agrandie du détail C de la figure 1,

- la figure 1D est une vue agrandie de la zone B, les deux plaques étant en contact l'une avec l'autre, avant l'opération de brasage,

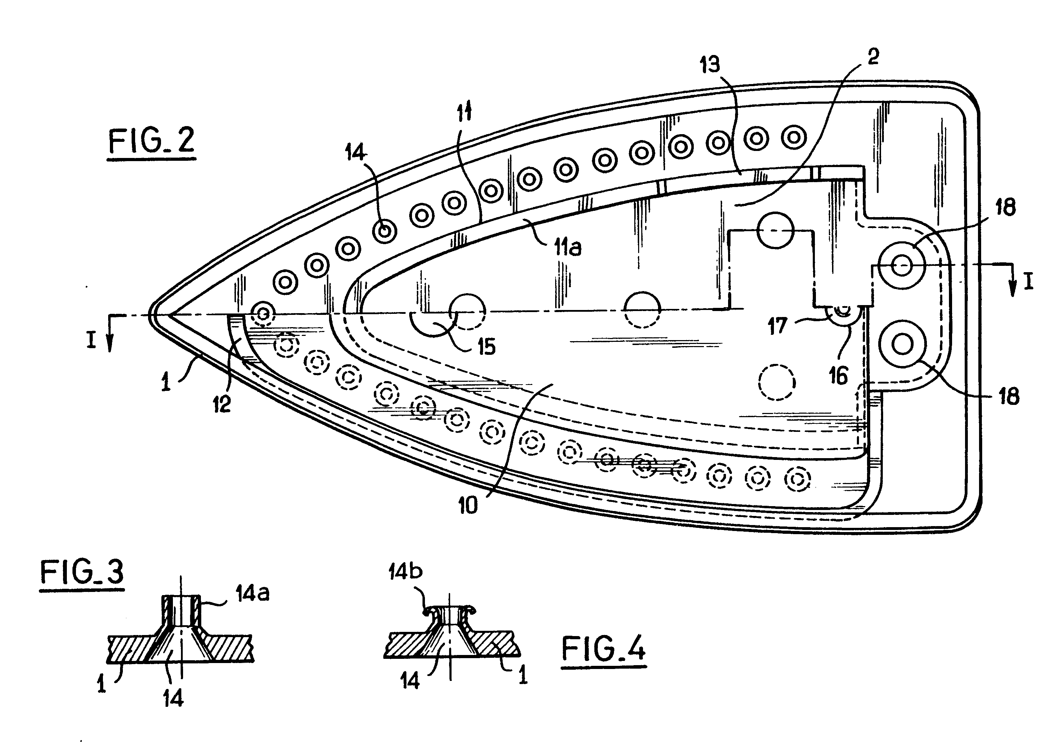

- la figure 2 est une vue de dessus de la semelle, la demi-vue supérieure montrant la semelle sans capot de fermeture et la demi-vue inférieure montrant le capot en position sur la semelle,

- la figure 3 est une vue en coupe d'un orifice de passage de la vapeur de la semelle, réalisé par filage avant l'opération de repoussage,

- la figure 4 est une vue en coupe de l'orifice de passage de la vapeur terminé, après repoussage de sa collerette,

- la figure 5 est une vue en coupe transversale de la semelle au niveau des plots d'alimentation électrique de l'élément chauffant résistant.

Dans la réalisation de la figure 1, la semelle de fer à repasser à vapeur conforme à l'invention comprend :

- une première plaque 1 constituant la semelle proprement dite et présentant une face 1a devant venir en contact avec l'article textile à repasser et réalisée par emboutissage d'une feuille d'aluminium comprenant sur sa face 1b opposée à la face 1a précitée, une couche colaminée d'alliage de brasage 1c (voir figure 1A) ;

- une seconde plaque 2 constituant le fond de la chambre de vaporisation et réalisée par emboutissage d'une feuille d'aluminium comprenant sur sa face 2a adjacente à la première plaque, une couche colaminée d'alliage de brasage 2b (voir figure 1B). Cette seconde plaque 2 présente également une série de bossages 3 (voir également figure 2) obtenus par semi-découpage en contact avec la face de la première plaque 1 comportant une couche 1c colaminée d'alliage de brasage.

La semelle comporte en outre un élément chauffant résistant plat 4 qui sera détaillé plus loin inséré entre les deux plaques précitées 1, 2 et séparé de celles-ci par des couches électriquement isolantes 5, 6, 7, 8.

Lorsque les deux plaques 1, 2 sont appliquées l'une sur l'autre, les bossages semi-découpés 3 de la seconde plaque 2 sont engagés dans des lacunes 4a, 5a, 6a, 7a, 8a ménagées dans l'élément chauffant 4 et les couches isolantes 5, 6, 7, 8 (voir figure 1D).

Ces deux plaques 1, 2 sont assemblées l'une à l'autre par une brasure étanche périphérique et une série de brasures réalisées au niveau des bossages 3.

La brasure périphérique est réalisée entre une nervure en saillie 9 adjacente au bord extérieur de la plaque 2 et la face 1b de la première plaque 1.

Du fait que les deux plaques 1, 2 comportent sur leurs faces en regard une couche colaminée de brasure, il suffit de porter l'ensemble, par exemple dans une enceinte sous vide, à une température suffisante pour faire fondre l'alliage de brasage. En ce qui concerne le choix de l'alliage de brasage, on se reportera à la description de la demande de brevet français n° 88 02265.

Dans la réalisation représentée sur les figures 1 et 2, la semelle comporte en outre une plaque ou capot de fermeture 10 de la chambre de vaporisation réalisée par emboutissage d'une feuille d'aluminium comportant sur sa face 10a en regard de la seconde plaque 2 une couche 10b (voir figure 1C) colaminée d'alliage de brasage. Cette plaque de fermeture 10 est fixée par brasage aux deux autres plaques 1, 2 en même temps que ces deux dernières.

Ainsi, pour assembler les plaques 1, 2, 10, il suffit de les appliquer les unes contre les autres et de chauffer l'ensemble pour faire fondre la brasure des couches colaminées 1c, 2b, et 10b.

Lors de cette opération de brasage, on réalise une jonction étanche d'une part entre la nervure périphérique 9 de la plaque 2 et la face 1b de la plaque 1 et d'autre part entre le fond 10a de la plaque de fermeture 10 et le bord supérieur 11a de la paroi latérale 11 de la plaque 2 ainsi qu'entre le rebord périphérique 12 de la plaque de fermeture 10 et la surface de la plaque 1.

Le bord supérieur 11a de la paroi latérale de la plaque 2 présente une échancrure 13 qui permet à la vapeur formée dans la chambre de vaporisation de s'échapper à l'extérieur par les orifices 14 ménagés dans la plaque 1.

La paroi supérieure de la plaque de fermeture 10 présente un trou 15 destiné au passage du dispositif d'écoulement de l'eau à l'intérieur de la chambre de vaporisation. La fixation étanche de ce dispositif peut également être réalisée par brasage simultané avec celui réalisé entre les autres parties de la semelle.

La paroi supérieure de la plaque de fermeture 10 présente en outre un second trou 16 pour la fixation d'un manchon 17 destiné à fixer le thermostat de régulation thermique du fer. La fixation étanche du manchon 17 peut également être réalisée de façon étanche comme indiqué ci-dessus.

La chambre de vaporisation est ainsi rendue complètement étanche, à l'exception des échancrures 13 pour le passage de la vapeur.

Etant donné la présence de la couche d'alliage de brasage sur la face interne 1b de la semelle 1, et par le fait que les orifices de vapeur 14 sont obtenus par filage (voir figure 3), la face extérieure de la tubulure 14a possède elle aussi une couche de brasure. Lors de sa fusion, l'alliage de brasage étant très "mouillant" remonte la partie distale de la tubulure 14a et remplit le trou 14. Afin d'éviter cet inconvénient (qui oblige à usiner en reprise les orifices obturés) le bord libre de la tubulure 14a est rabattu de telle manière qu'une collerette 14b soit formée (voir figure 4). La brasure ne peut alors plus franchir la zone distale.

L'étanchéité de l'ensemble élément chauffant 4 et couches isolantes 5 à 8 est obtenue par le fait que la nervure 9, établie périphériquement à la face externe de la chambre de vaporisation 2 est en contact avec la face interne de la semelle 1, et est brasée en tout point avec ladite semelle. Les seules zones en contact avec l'atmosphère, à la sortie de l'opération de brasage, sont les passages 18 prévus pour les contacts d'alimentation électrique de l'élément chauffant résistant 4.

On voit notamment sur la figure 1 que le bord extérieur 2c de la seconde plaque 2 entoure à la fois l'élément chauffant 4 et les couches isolantes 5 à 8 ainsi que les passages 18 prévus pour les contacts d'alimentation électrique de l'élément chauffant résistant 4.

Sur la figure 4, on voit que les contacts d'alimentation électrique 19 sont engagés dans les passages 18 et sont en contact avec le métal de l'élément chauffant résistant 4 sous la force exercée par un ressort 20.

Sur cette figure, on voit également que les passages 18 sont obturés de façon étanche par des manchons isolants 21 entourant les contacts d'alimentation 19.

L'étanchéité est réalisée grâce à un joint 22 en résine silicone. Des manchons isolants 21 sont engagés à force dans les passages 18 et maintenus appliqués contre la paroi inférieure de la chambre de vaporisation par un étrier 23 fixé à la semelle 1 par des clips 24 engagés dans des bossages fixés à ladite semelle.

La connexion électrique avec les contacts 19 est réalisée par des cosses 25. Une capote isolante 26 assure l'étanchéité entre les manchons isolants 21 et les fils conducteurs reliés au réseau.

Dans l'exemple de réalisation représenté sur la figure 1, l'élément chauffant résistant 4 est isolé électriquement de la première et seconde plaques 1, 2, de chaque côté, par deux feuilles 5, 6 et 7, 8 de micanite superposées et séparables et d'une feuille de micanite liée mécaniquement à la feuille métallique de l'élément chauffant 4 et à la feuille de micanite adjacente 5 ou 7. Les différentes feuilles de micanite ont une épaisseur égale à 0,1 mm ± 0,02 mm.

A titre de variante de réalisation, la feuille métallique de l'élément chauffant peut être isolée électriquement de la première et seconde plaques 1, 2, de chaque côté par trois feuilles de micanite superposées et séparables.

Bien entendu, l'invention n'est pas limitée aux exemples de réalisation que l'on vient de décrire et on peut apporter à ceux-ci de nombreuses modifications sans sortir du cadre de l'invention.

**Revendications**

1. Semelle de fer à repasser à vapeur réalisée par assemblage de plusieurs feuilles métalliques brasées l'une à l'autre et comprenant entre deux de ces feuilles un élément chauffant résistant plat (4), caractérisée en ce qu'elle comprend :
- une première plaque (1) constituant la semelle et présentant une face (1a) devant venir en contact avec l'article textile à repasser et réalisée par emboutissage d'une feuille d'aluminium comprenant sur sa face (1b) opposée à la face précitée, une couche colaminée d'alliage de brasage (1c),
- une seconde plaque (2) constituant le fond de la chambre de vaporisation et réalisée par emboutissage d'une feuille d'aluminium comprenant sur sa face (2a) adjacente à la première plaque (1) une couche colaminée d'alliage de brasage (2b), ainsi qu'une série de bossages (3) en contact avec ladite face (1b) de la première plaque (1) comportant une couche colaminée d'alliage de brasage,
- un élément chauffant résistant plat (4) inséré entre les deux plaques précitées (1, 2) et séparé de celles-ci par des couches électriquement isolantes (5, 6, 7, 8), les bossages (3) de la seconde plaque (2) étant engagés dans des lacunes (4a, 5a, 6a, 7a, 8a) ménagées dans ledit élément chauffant (4) et lesdites couches isolantes (5, 6, 7, 8) et
- les deux plaques (1, 2) étant assemblées l'une à l'autre par une brasure étanche périphérique et une série de brasures réalisées au niveau des bossages (3).

2. Semelle conforme à la revendication 1, caractérisée en ce qu'elle comporte en outre une plaque de fermeture (10) de la chambre de vaporisation réalisée par emboutissage d'une feuille d'aluminium comportant sur sa face (10a) en regard de la seconde plaque (2) une couche colaminée d'alliage de brasage (10b), cette plaque de fermeture (10) étant fixée par brasage aux deux autres plaques (1, 2) en même temps que ces deux dernières.

3. Semelle conforme à l'une des revendications 1 ou 2, caractérisée en ce que le bord extérieur (2c) de la seconde plaque (2) entoure complètement l'élément chauffant électrique (4), ce bord étant relié de façon étanche à la première plaque par une brasure périphérique.

4. Semelle conforme à la revendication 3, caractérisée en ce que le bord extérieur (2c) de la seconde plaque (2) entoure également les contacts (19) d'alimentation électrique de l'élément chauffant résistant (4).

5. Semelle conforme à la revendication 4, caractérisée en ce que la seconde plaque (2) comporte des passages (18) dans lesquels sont engagés les contacts (19) d'alimentation électrique en contact avec l'élément chauffant résistant (4).

6. Semelle conforme à la revendication 5, caractérisée en ce que les passages (18) sont obturés de façon étanche par des organes (21) isolants les contacts d'alimentation.

7. Semelle conforme à l'une des revendications 1 à 6, caractérisée en ce que l'élément chauffant résistant (4) est isolé électriquement de la première et seconde plaques (1, 2), de chaque côté, par deux feuilles de micanite superposées et séparables (5, 6 ; 7, 8) et d'une feuille de micanite liée mécaniquement à la feuille métallique de l'élément chauffant (3) et à la feuille de micanite adjacente (5 ou 7).

8. Semelle conforme à l'une des revendications 1 à 6, caractérisée en ce que la feuille métallique de l'élément chauffant (4) est isolée électriquement de la première et seconde plaques (1, 2), de chaque côté par trois feuilles de micanite superposées et séparables.

9. Semelle conforme à l'une des revendications 1 à 8, caractérisée en ce que la première plaque (1) présente des orifices (14) de passage de la vapeur réalisés par filage de la feuille d'aluminium et présentant une collerette (14b) à leur partie distale.

15    10    C    17

16

12    12

11a    13    18    2c

11    9    3    2    2a    3    6a    3    5a    B    **FIG.1**

6    5    6a    4

7    4a

8    7a    8a    1b

1    14    1a    A

1c

1b

1

1a

**FIG.1A**    **FIG.1B**    **FIG.1C**

2    2a    3    2b    10a    10    10b

EP 0 380 896 A1

**FIG.1D**

**FIG.5**

FIG.2

FIG.3

FIG.4

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | EP-A-0111445 (JURA ELEKTROAPPARATE-FABRIKEN L.HENZIROHS) <br> * page 2, ligne 14 - page 3, ligne 10; figures 1, 2 * <br> --- | 1, 2 | D06F75/24 <br> D06F75/38 <br> H05B3/30 <br> H05B3/72 |
| A | BE-A-676919 (ELECTROMECHANIK HANS BREY) <br> * revendications 1, 4 * <br> --- | 1, 2 | |
| A | DE-A-2151860 (VEB ELEKTROWARME SÖRNEWITZ) <br> * page 3, ligne 6 - page 4, ligne 10 * <br> --- | 1, 2 | |
| A | EP-A-0202969 (SEB) <br> * le document en entier * <br> --- | 1, 7, 8 | |
| A | FR-A-1431164 (MORPHY-RICHARDS (CRAY)) <br> * le document en entier * <br> ----- | 1, 7, 8 | |

**DOMAINES TECHNIQUES RECHERCHES (Int. Cl.5)**

D06F
H05B

Le présent rapport a été établi pour toutes les revendications

| Lieu de la recherche | Date d'achèvement de la recherche | Examinateur |
|---|---|---|
| LA HAYE | 02 AVRIL 1990 | RAYBOULD B.D.J. |

EPO FORM 1503 03.82 (P0402)